# EUROPEAN PATENT SPECIFICATION

(11) **EP 2 266 356 B1**
(45) Date of publication and mention of the grant of the patent: **22.10.2014**
(21) Application number: 09721301.1
(22) Date of filing: 17.03.2009
(51) Int. Cl.: H04W 72/04

(54) **METHOD AND APPARATUS FOR ENABLING QUICK PAGING IN TELECOMMUNICATION SYSTEMS**
VERFAHREN UND VORRICHTUNG FÜR SCHNELLFUNKRUF IN TELEKOMMUNIKATIONSSYSTEMEN
PROCÉDÉ ET APPAREIL DESTINÉS À PERMETTRE UNE RADIOMESSAGERIE RAPIDE DANS DES SYSTÈMES DE TÉLÉCOMMUNICATION

(30) Priority: 19.03.2008 US 37924 P; 30.12.2008 US 346259
(43) Date of publication of application: 29.12.2010
(73) Proprietor: Telefonaktiebolaget L M Ericsson (publ), 164 83 Stockholm (SE)
(72) Inventor: RAMESH, Rajaram, Raleigh NC 27606 (US); BALACHANDRAN, Kumar, Pleasanton, CA 94566 (US); KOORAPATY, Havish, Saratoga, CA 95070 (US)
(74) Representative: HOFFMANN EITLE
(86) International application number: PCT/IB2009/000538
(87) International publication number: WO 2009/115894

(56) References cited:
- WO-A-99/67972
- US-A1- 2005 265 360
- US-A1- 2005 277 429

## Description

### TECHNICAL FIELD

This invention relates to radio communication systems and more particularly to paging in such systems.

### BACKGROUND

The Institute of Electrical and Electronic Engineers (IEEE) 802.16 Working Group on Broadband Wireless Access Standards is specifying standards for broadband radio communication systems in wireless metropolitan area networks. The IEEE 802.16 family of specifications is called the Wireless Metropolitan Area Network (WirelessMAN) standard and has been dubbed "WiMAX", which is short for Worldwide Interoperability for Microwave Access, by an industry group called the WiMAX Forum. The mission of the WiMAX Forum is to promote and certify compatibility and interoperability of products complying with the IEEE 802.16 specifications.

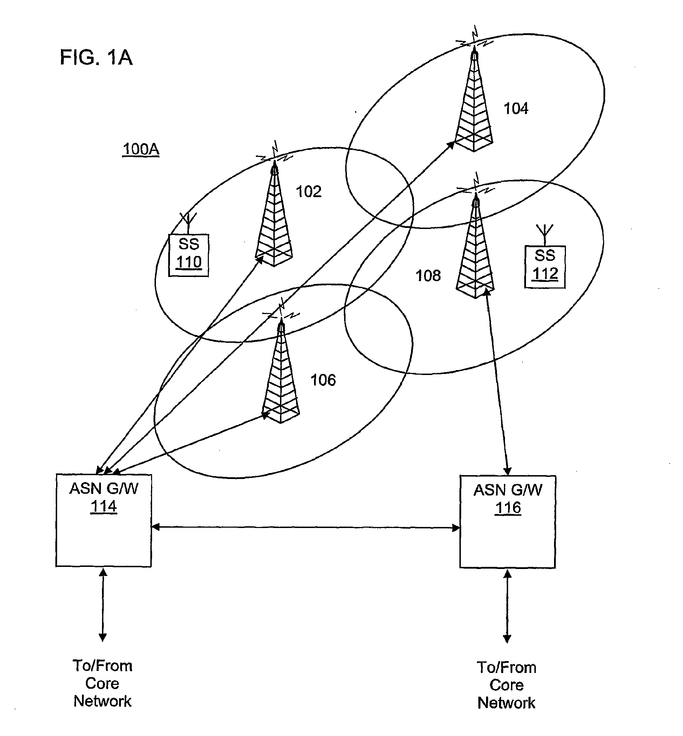

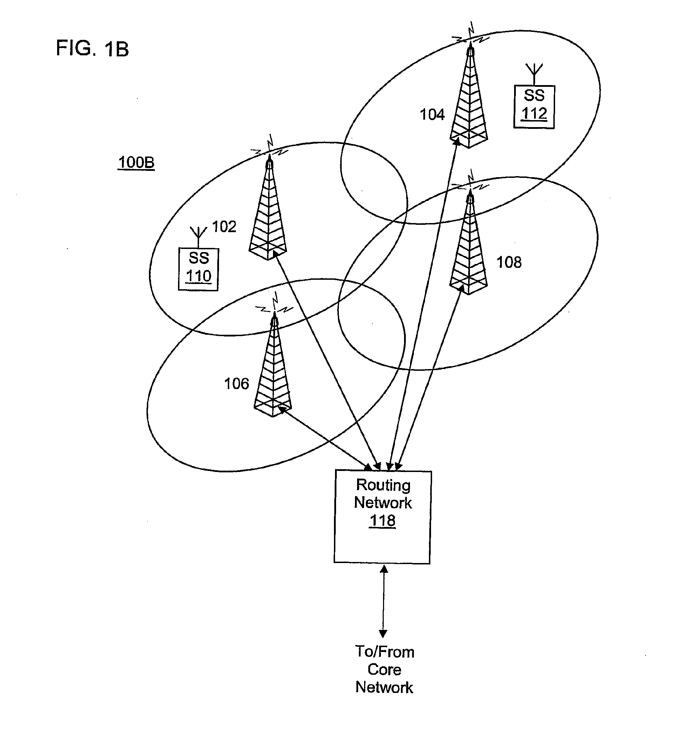

The WirelessMAN standard defines aspects of the air interface between a radio transmitter and a radio receiver, including the physical (PHY) layer, and the Medium Access Control (MAC) layer. The WiMAX Forum has defined an architecture for connecting a WiMAX network with other networks, such as networks complying with IEEE 802.11 and cellular networks, and a variety of other aspects of operating a WiMAX network, including address allocation, authentication, etc. FIGs. 1A, 1B show examples of WiMAX networks, and it should be understood that the arrangement of functionalities depicted in FIGs. 1A, 1B can be modified in WiMAX and other communication systems.

As depicted in FIG. 1A, the network 100A includes base stations (BSs) 102, 104, 106, 108 that respectively transmit and receive radio signals in geographic areas called "cells", which typically overlap to some extent as shown. Subscriber stations (SSs) 110, 112 are located in the cells and exchange radio signals with the BSs according to the WiMAX air interface standard. An SS is typically either a mobile SS (MS) or a fixed SS, and it will be understood that a network can include many cells and many SSs. In FIG. 1A, the BSs communicate with and are controlled by Access Service Network (ASN) Gateways (G/Ws) 114, 116 that also communicate with each other, and with other core network nodes and communication networks (not shown), such as the public switched telephone network and the internet. SSs, such as SSs 110, 112, can be organized into groups for paging, and BSs, such as BSs 102, 104, 106, 108, can be organized into paging areas as described in more detail below.

FIG. 1B depicts a WiMAX network 100B that also includes BSs 102, 104, 106, 108 and SSs 110, 112 as in the network 100A. The network 100B is more decentralized than the network 100A in that, in FIG. 1B, the BSs communicate with each other directly through a suitable routing network 118 that also communicates with other core network nodes and communication networks (not shown).

According to one mode of IEEE 802.16, the downlink (DL) radio signals transmitted by the BSs are orthogonal frequency division multiple access (OFDMA) signals. In an OFDMA communication system, a data stream to be transmitted by a BS to a SS is portioned among a number of narrowband subcarriers, or tones, that are transmitted in parallel. Different groups of subcarriers can be used at different times for different SSs. Because each subcarrier is narrowband, each subcarrier experiences mainly flat fading, which makes it easier for a SS to demodulate each subcarrier.

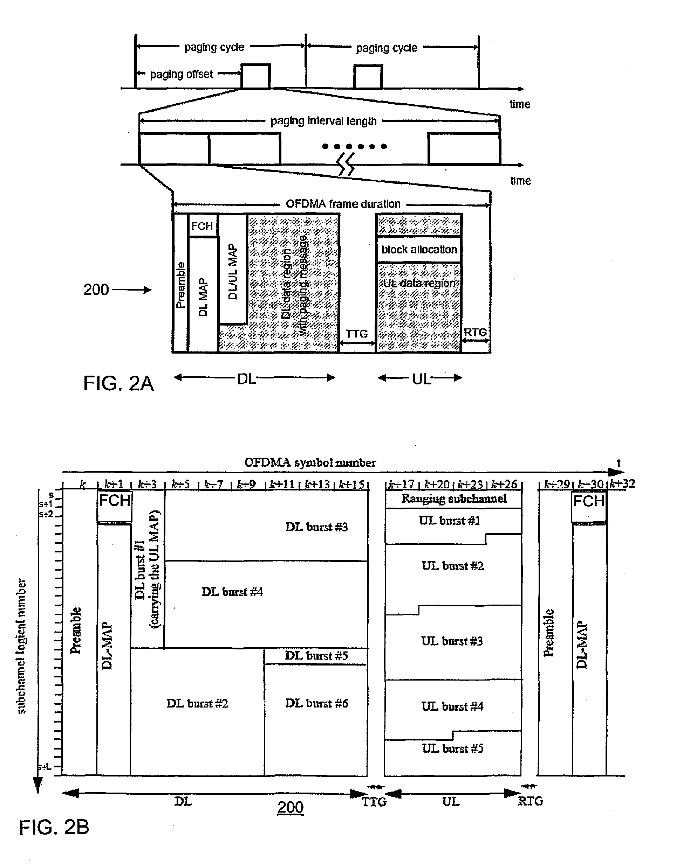

The DL radio signals and uplink (UL) radio signals transmitted by the SSs are organized as successions of OFDMA frames, which are depicted in FIGs. 2A, 2B according to a time-division duplex (TDD) arrangement in the IEEE 802.16e standard. FIG. 2B is a magnification of FIG. 2A and shows the format of the DL and UL subframes in more detail than in FIG. 2A. In FIGs. 2A, 2B, time, i.e., OFDMA symbol number, is shown in the horizontal direction and subchannel logical number, i.e., OFDM subcarrier frequency, is indicated by the vertical direction. FIG. 2B shows one complete frame and a portion of a succeeding frame, with each DL subframe including sixteen symbols and each UL subframe including ten symbols, not counting guard symbols.

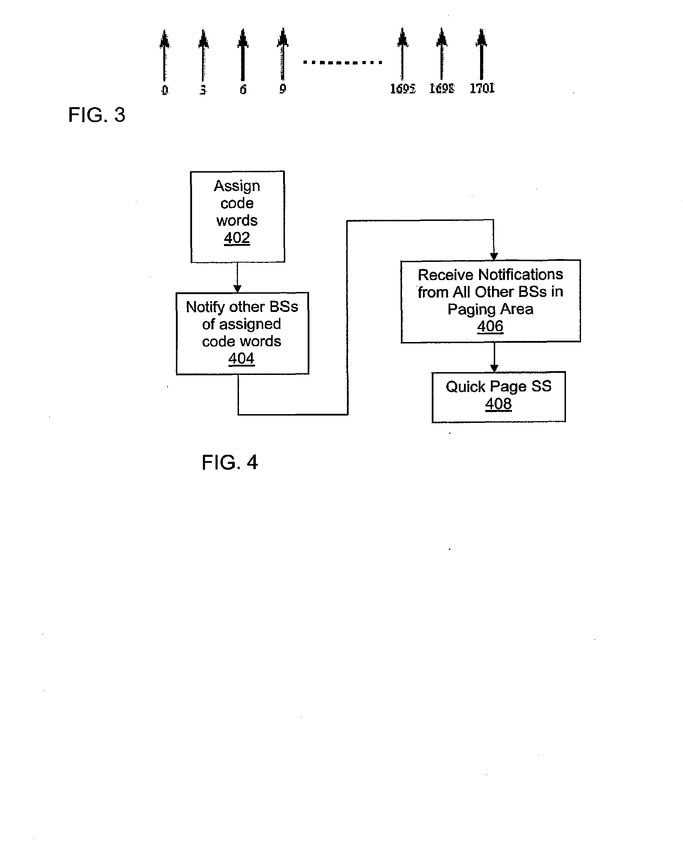

Each DL frame 200 starts with a preamble signal that includes a known binary signal sent on every third OFDM tone or subcarrier, as depicted by FIG. 3. The range of subcarriers shown in FIG. 3 is numbered 0, 3, 6, ..., 1701, but a preamble can use fewer than that many subcarriers.

As seen in FIGs. 2A, 2B, each frame's preamble is followed by a DL transmission period and then an UL transmission period. According to the standard, the preamble signal is sent in the first OFDM symbol of a frame, which is identified by an index k in FIG. 2B, and is defined by the segment, i.e., one of the three sets of tones to be used, and a parameter IDCell, which is the transmitting cell's identification (ID) information. A SS uses the preamble for initial synchronization of its receiver to the BS (the network), and to determine the location of a frame control header (FCH), which is among the first bursts appearing in the DL portion of a frame. A SS also uses the preambles in signals transmitted by neighboring BSs to synchronize to them for purposes of measurement for handover from one cell to another.

The FCH gives information on the DL signal parameters, including a DL map message (DL-MAP), which is a medium access control (MAC) message that defines DL allocations for data, and parameters relevant for reception of the signal. The DL-MAP may be followed by an UL map message (UL-MAP), which provides UL allocations for data, and other parameters relevant for transmission of signals from an identified SS. With the assignments in time and frequency from the DL-MAP, an identified SS can receive the data in the particular location. Similarly, it can identify assignments in time and frequency on the UL-MAP, and transmit accordingly. FIGs.2A, 2B also show a transmit/receive transition gap (TTG) interval and a receive/transmit transition gap (RTG) interval, which are used by the BS and SS to switch from transmit to receive and vice versa.

FIG. 2A also illustrates how a BS pages an SS operating in idle mode, showing the relationship between paging cycles, paging offset, BS paging interval, and OFDMA frames. Only two of the succession of paging cycles are shown in FIG. 2A. An SS "listens" for a page message from the BS during only a portion of a paging cycle, and the location of that paging interval is determined by a paging offset from the start of the paging cycle. A paging message can span several OFDMA frames, which the SS needs to demodulate to read the entire message.

Thus, while a SS is idle, the SS periodically turns on its baseband unit, which includes a fast Fourier transform (FFT) demodulator and decoder, even when there are no paging messages for it and no system configuration changes/updates. The SS first synchronizes with the preamble and reads the FCH, and it then reads the DL-MAP to look for the location and the format of a broadcast connection identifier (CID). If the DL-MAP shows a broadcast CID, the SS demodulates that burst to determine whether there is a BS broadcast paging message (MOB_PAG-ADV).

Most of the time, there is no paging message and no action required by the SS, but during each paging interval, the SS has to be fully "awake", which is to say, its receiver has to be powered up, for a number of OFDMA frames, using electrical power and possibly draining a battery over time. For a BS, periodically sending MOB_PAG-ADV messages that require no action also wastes downlink capacity. In addition to MOB_PAG-ADV messages, changes in channel descriptors or broadcast system updates can trigger an idle SS to stay on for updating the system parameters or reading other coming messages.

A "quick" paging mechanism that can reduce the negative effects of the conventional paging mechanism is not specified in current versions of the WiMAX standards. In such a quick paging mechanism, a simple signal would indicate to a group of SSs that a paging signal exists in a subsequently transmitted signal block. Thus far, proposals for quick paging either steal system resources from a system's available resources, thereby reducing system capacity, or occupy transmit and receive gaps in a TDD version of the system, which could lead to issues of compatibility among different device implementations.

A new standard for mobile broadband communication is under development as IEEE 802.16m, which is required to be backward-compatible with products complying with the current WiMAX standards and at the same time should improve performance considerably compared to current WiMAX technology. In developing IEEE 802.16m, a proposal has been made for a quick paging mechanism that is described in IEEE C802.16m07/217, "Wake-up Signal for 802.16m OFDMA Idle Mode" (Nov. 7, 2007). If an SS decodes the quick paging signal correctly, the SS needs to listen to the conventional paging signal; otherwise, the SS can go back to "sleep", thereby saving its resources, such as battery power.

U.S. Provisional Patent Application No. 61/014,471 filed on December 18, 2007, which is now PCT Patent Application No. WO 2009/081263 filed on December 18, 2008, by the current inventors describes using unused subcarriers (i.e., unused system resources) in a preamble signal to send assigned code words for quick paging. The code words assigned to SSs can include unused conventional preamble sequences and orthogonal sequences, such as Walsh-Hadamard (W-H) sequences, or bi-orthogonal sequences, such as W-H sequences and their inverses. Those patent applications are incorporated here by reference.

For one example, a W-H code word can be used as the signal for quick paging as described in the patent applications cited above. With a 10-MHz-wide WiMAX channel using an FFT of length 1024 bits, the length of the conventional preamble is 284 bits. Thus, there are 568 unused subcarrier positions that can be used for a quick paging signal, and so a W-H code word of length 512 bits can be used. For a 5-MHz-wide WiMAX channel, the FFT size is 512 bits and the preamble length is 143 bits, and so 286 unused subcarrier positions are available for the quick paging signal, thereby allowing use of a W-H code word of length 256 bits. Other channel bandwidths, such as 8.75 MHz, can be accommodated in a similar manner. Each such quick paging code word can identify a respective group of SSs, and the presence of a code word in a DL signal indicates to the SS(s) to which that code word is assigned that those SS(s) are required to read the full paging message in a subsequent DL signal.

In cellular telephone networks using code division multiple access (CDMA), such as CDMA2000 and wideband CDMA (WCDMA) networks, paging groups are predefined by the applicable standards based on mobile station IDs. Similarly, a mapping between quick paging messages and mobile station IDs is also predefined. The cellular telephone architecture is centralized, and so a central node passes registration information about a mobile station to multiple cells in a paging area. Thus, the mobile station can be reached in any cell belonging to the assigned paging area using a quick paging message. Additionally, the mobile station informs the network whenever it enters a new cell that belongs to a different paging area, triggering defined paging area updating procedures.

Nevertheless, there is no fixed mapping between SS IDs and the paging groups predefined in a WiMAX network, and there is no fixed mapping between SS IDs and quick paging messages. In addition, the typical WiMAX network architecture (see FIGs. 1A, 1B) lacks a central node, such as a radio network controller or mobile switching center in a cellular telephone network, that is in charge of distributing the necessary information and mappings.

In addition to the above, there is known from WO 99/67972 a cellular communication system with common channel soft handoff. The respective teaching considers that base stations in a given paging region transmit a so-called "F-QPCH" at the same time. These F-QPCHs that transmit quick pages at substantially the same time can be combined by a mobile station in a soft handoff.

U.S. Patent Application US 2005/0265360 A1 discloses a base station informing a MAC address of a mobile station to all base stations in its paging group.

### SUMMARY

This application describes methods and apparatus by which transmitting stations or other network nodes can autonomously assign quick paging code words to receiving stations. Base stations within a paging area exchange information pertaining to the subscriber stations to which such quick paging code words are assigned. The information exchanged by base stations can include a database of subscriber station identities and assigned quick paging code words.

The above described objects are met by the subject-matter of the independent claims. Further preferred embodiments are defined in the dependent claims.

In accordance with aspects of this invention, there is provided a method of enabling a transmitting station for quick paging a receiving station in a telecommunication system having a plurality of transmitting stations. The method includes notifying all other transmitting stations in a paging area of quick paging code words associated with the receiving station by the transmitting station.

Also in accordance with aspects of this invention, there is provided a transmitting station in a telecommunication system having a plurality of transmitting stations for communicating with receiving stations. The transmitting station includes a memory configured to store identifiers of respective receiving stations and corresponding quick paging code words and information identifying all other transmitting stations in a paging area that includes the transmitting station; and a control unit configured to provide and receive control and other signals and to store and retrieve information from the memory. The code words have been assigned to receiving stations by any transmitting station in a paging area of the transmitting station.

Also in accordance with aspects of this invention, there is provided a computer-readable medium having stored therein instructions that, when executed, cause the computer to carry out a method of enabling a transmitting station for quick paging a receiving station in a telecommunication system having a plurality of transmitting stations. The method includes notifying all other transmitting stations in a paging area of quick paging code words associated with the receiving station by the transmitting station.

### BRIEF DESCRIPTION OF THE DRAWINGS

The several features, objects, and advantages of this invention will be understood by reading this description in conjunction with the drawings, in which:
FIGs. 1A, 1B depict examples of telecommunication networks;
FIGs. 2A, 2B depict downlink and uplink signals organized as successions of frames;
FIG. 3 depicts an arrangement of subcarriers for preamble signals;
FIG. 4 is a flow chart of method of enabling quick paging in a telecommunication system; and
FIG.5 is a block diagram of a transmitting station in a telecommunication network.

### DETAILED DESCRIPTION

This description focusses on radio communication systems according to the WiMAX standards, but the artisan will understand that the invention in general covers other wireless communication systems. In WiMAX, a quick paging mechanism can use code words assigned to SSs or groups of SSs and sent as quick paging signals similar to the preambles of DL frames over unused frequency resources to signal the SSs. As an example of that mechanism, the quick paging code word(s) assigned to a particular SS can be unused preamble sequences and/or a subset of W-H sequences, and the respective code word(s) are masked by a cell-specific pseudorandom-noise (PN) sequence. A SS determines whether a quick paging code word assigned to it was sent by a BS, and based on that determination, the SS can decide to receive a full conventional paging signal in a subsequent OFDMA frame.

The inventors have recognized that whether different BSs use the same method or different methods of assigning quick paging code words to SSs, it is advantageous for an SS simply to assume that the same quick paging code words are used by all BSs in a paging area. To enable such operation by the SSs in a paging area covered by several BSs, those several BSs share information about the quick paging code words assigned to the various SSs known to the BSs.

FIG.4 is a flow chart of a method of enabling quick paging in a telecommunication system, such as a WiMAX system. For example, let BS 108 have assigned SS 110 quick paging code words called c1, c2, and c3 by any method desired, even an arbitrary one (step 402). Such an assignment would advantageously have been done when BS 108 was the preferred base station for SS 110. In step 404, the BS 108 notifies the other BSs, e.g., BSs 102, 104, 106, in the same paging area of the code words it has assigned. The notification can communicate the code word assignment information to the other BSs in any suitable way, e.g., by messages sent to the other BSs through ASN G/Ws, such as ASN G/Ws 114, 116, or through a routing network, such as routing network 118, or through any other suitable communication channel. For example, the code word assignment messages can be sent according to a suitably defined protocol, such as the Simple Network Management Protocol (SNMP), which is defined in RFC 3411 - RFC 3418 promulgated by the Internet Engineering Task Force (IETF). The artisan will understand that other protocols can be used. As an alternative, the BS 108 can send the code word assignment information using a multicast message, for which the other BSs 102,104, 106 in its paging area are members of a multicast group.

In step 406, the BS 108 receives similar notifications from all other transmitting stations in the paging area, e.g., BSs 102, 104, 106, of quick paging code words associated with receiving stations by the other transmitting stations. If the SS 110 moves and selects another BS, e.g., BS 106, as its preferred BS, the SS 110 need not seek to determine quick paging code words assigned to it by BS 106. Instead, the SS 110 needs only to read the broadcast information transmitted by the BS 106 and thereby determine the PN sequence specific to BS 106. It will be understood that the identification of the paging area to which a BS belongs is typically known to the SS by information broadcast by the BS. If a SS moves into the coverage area of a BS in a different paging area, the SS typically "reconnects" to the network to inform it of the SS's change of paging area. If a SS moves into the coverage area of a BS in the same paging area, the SS might not perform such reconnection.

If BS 106 wants to page SS 110, BS 106 simply sends (step 408) a quick paging message using one of the code words assigned to the SS 110 by the BS 108. In accordance with the patent applications cited and incorporated by reference above, the BS 106 can send such a quick paging message at a predetermined time offset earlier than a conventional full paging message.

It will be noted that the BS 106 need not know that the SS 110 has selected BS 106 as its preferred base station to use the quick paging mechanism. Such a situation can occur when a mobile SS performs a cell reselection while it is in idle mode. It will also be noted that as part of quick paging the SS 110 (step 408), the BS 106 can use its cell-specific PN sequence to mask the quick paging code word sent to the SS 110 in the quick paging message.

As described above, the communication of assigned quick paging code words among BSs in a paging area can be carried out in many ways. For example, BSs in a paging area can communicate with each other through a central entity, such as an ASN G/W, that can receive assignment information from multiple base stations and re-send collated information to all base stations within a paging area. For yet another example, the BSs in a paging area can directly communicate with the other BSs in the paging area, such as through a suitable routing network, and exchange information about quick paging code word assignments. In the latter example, a BS can either transmit the assignment information to individually addressed BSs, or the BS can transmit the assignment information to all other BSs when the paging area is defined by a suitable multicast address, which enables all base stations in the paging area to receive a single message that is sent. The direct communication between BSs can occur according to a suitably defined protocol, such as SNMP, which can operate over conventional TCP/IP (transmission control protocol/internet protocol). Alternatively, a suitably defined message can be sent over well-known multicast schemes/protocols used over IP-based networks.

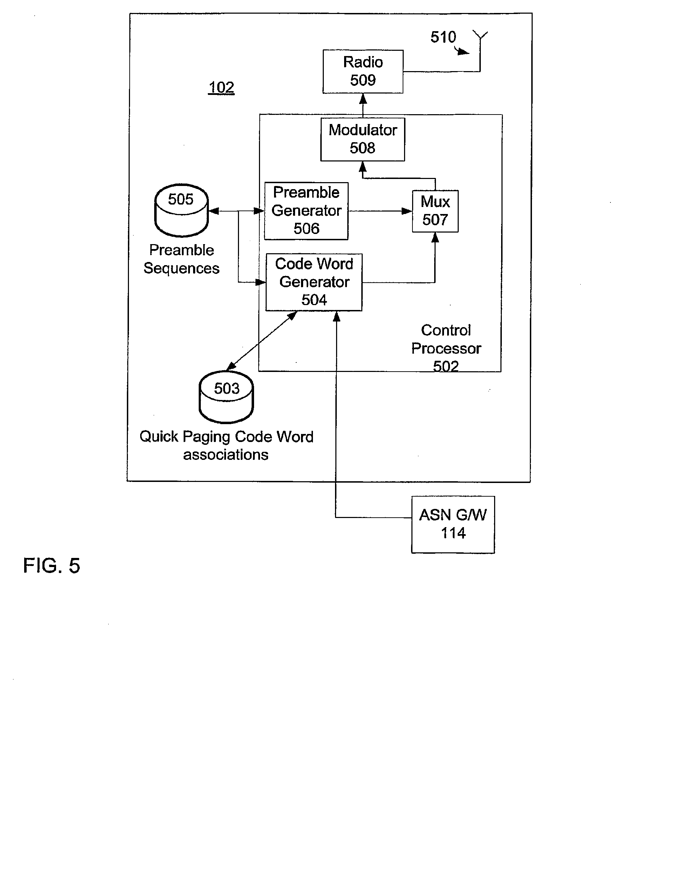

FIG. 5 is a block diagram of a portion of the BS 102, which is typical of other BSs 104, 106, 108 and such transmitting nodes or stations in a WiMAX OFDMA network 100, that can communicate with other BSs in a paging area for the methods described above. It will be appreciated that the functional blocks depicted in FIG. 5 can be combined and re-arranged in a variety of equivalent ways, and that many of the functions can be performed by one or more suitably programmed digital signal processors and other known electronic circuits.

The BS 102 is operated by a control processor 502, which typically and advantageously is a suitably programmed digital signal processor. The control processor 502 typically provides and receives control and other signals from various devices in the BS 102. For simplicity in FIG. 5, the control processor 502 is shown exchanging information with a suitable memory 503, which is a repository of SS IDs and corresponding quick paging code words that have been assigned by other BSs in the paging area of the transmitting station 400 and that have been assigned by the station 500. The memory can also store information identifying other BSs in the same paging area and a station-specific PN sequence for masking quick paging code words transmitted. The artisan will understand that the PN sequence can alternatively be computed by the control processor 502 or a suitable PN sequence generator.

Such information is provided to a quick paging code word generator 504, which uses the information to sort SSs into paging groups and paging groups into super paging groups, and to assign code words. Typically, the transmitting station 500 would sort those SSs for which the transmitting station 500 is the serving node or preferred cell. The code word generator 504 also generates selected quick paging code words for transmission to one or more SSs and paging groups as described above. For that purpose, the generator 504 can produce suitable code word sequences, such as W-H sequences, or retrieve unused conventional preamble sequences from a preamble sequence memory 505. The quick paging code word generator 504 can also be configured to mask the selected quick paging code words by combining those code words with a PN sequence.

It will be understood that although the generator 504 is depicted in FIG. 5 as part of the control processor 502, this is not necessary; the generator 504 as well as one or more other devices depicted as part of the processor 502 can be implemented by dedicated programmed processors or other suitable logic configured to perform their functions.

A preamble generator 506 also retrieves stored conventional preamble sequences from the memory 505 that are then used for producing the conventional preamble portion of the DL signal transmitted by the BS 102.

The code word generator 504 provides information about the quick paging code words and/or the appropriate quick paging code words to a multiplexer 507, which also receives the conventional preamble generated by the generator 506. The multiplexer 507 combines the information or code words with the preamble and other data in a DL frame or subframe to be transmitted. The combined information stream produced by the multiplexer 507 is converted by a suitable OFDM modulator 508 into modulation symbols that are provided to an OFDM radio transmitter 509, which impresses the modulation symbols on suitable subcarrier signals. The modulated subcarrier signals are transmitted through a suitable antenna 510.

As described above, the BS 102 is responsive to a request by the network to reach a SS or group of SSs by transmitting the quick paging code word(s) associated with the SS(s). In FIG. 5, such a request is shown as provided through an ASN gateway 114 to control processor 502 and generator 504. In response to the request, the generator 504 retrieves the code word(s) or code word ID(s) associated with the desired SS(s) from the memory 503, and generates the appropriate quick paging signal for transmission by the BS 102. For example, the control processor 502 receives the IDs of SSs that need to be paged, accesses the database 503 in which the identities of the PGs and SPGs and their corresponding SSs are stored, and produces the identity of the SPG to be paged. The quick paging signal generator 504 then outputs the appropriate quick paging code word.

This invention enables a receiving station such as a SS to save significant power by giving the SS the ability to receive a unified quick paging message across multiple cells, avoiding a need to receive quick paging assignments in each cell. It also enables transmitting stations such as base stations in a decentralized network to exchange relevant information in order for an SS to realize the power savings.

It will be appreciated that procedures described above are carried out repetitively as necessary, for example, to respond to the time-varying nature of communication signals exchanged by transmitters and receivers. Descriptions and examples of principles, aspects, and embodiments of this invention are intended to encompass both structural and functional equivalents, and it is intended that such equivalents include both currently known functional equivalents as well as functional equivalents developed in the future, regardless of structure. The artisan will also appreciate that block diagrams can represent conceptual views of illustrative circuitry embodying the principles of the technology and that flow charts, state transition diagrams, pseudocode, and the like represent processes which may be substantially represented in a computer-readable medium and so executed by a computer or programmable processor, whether or not such computer or processor is explicitly shown.

To facilitate understanding, many aspects of this invention are described in terms of sequences of actions that can be performed by, for example, elements of a programmable computer system. It will be recognized that various actions could be performed by specialized circuits (e.g., discrete logic gates interconnected to perform a specialized function or application-specific integrated circuits), by program instructions executed by one or more processors, or by a combination of both. Wireless transceivers implementing embodiments of this invention can be included in, for example, mobile telephones, pagers, headsets, laptop computers and other mobile terminals, base stations, and the like.

Moreover, this invention can additionally be considered to be embodied entirely within any form of computer-readable storage medium having stored therein an appropriate set of instructions for use by or in connection with an instruction-execution system, apparatus, or device, such as a computer-based system, processor-containing system, or other system that can fetch instructions from a medium and execute the instructions. As used here, a "computer-readable medium" can be any means that can contain, store, communicate, or transport the program for use by or in connection with the instruction-execution system, apparatus, or device. The computer-readable medium can be, for example but not limited to, an electronic, magnetic, optical, electromagnetic, infrared, or semiconductor system, apparatus, or device. More specific examples (a non-exhaustive list) of the computer-readable medium include an electrical connection having one or more wires, a portable computer diskette, a random-access memory (RAM), a read-only memory (ROM), an erasable programmable read-only memory (EPROM or Flash memory), and an optical fiber.

Thus, the invention may be embodied in many different forms, not all of which are described above, and all such forms are contemplated to be within the scope of the invention. For each of the various aspects of the invention, any such form may be referred to as "logic configured to" perform a described action, or alternatively as "logic that" performs a described action.

It is emphasized that the terms "comprises" and "comprising", when used in this application, specify the presence of stated features, integers, steps, or components and do not preclude the presence or addition of one or more other features, integers, steps, components, or groups thereof.

The particular embodiments described above are merely illustrative and should not be considered restrictive in any way. The scope of the invention is determined by the following claims, and all variations and equivalents that fall within the range of the claims are intended to be embraced therein.

## Claims

1. A method of enabling a base station for quick paging a subscriber station in a telecommunication system having a plurality of base stations, comprising:
assigning (402) by one of the plurality of base stations quick paging code words to the subscriber station, wherein a quick paging code word identifies one subscriber station or a group of subscriber stations;
notifying (404) all other base stations in a paging area of the quick paging code words assigned to the associated subscriber station by the base station.

2. The method of claim 1, further comprising receiving (406) notifications from all other base stations in the paging area of quick paging code words assigned to other associated subscriber stations by the other base stations.

3. The method of claim 1, wherein notifying (404) includes communicating quick paging code word assignment information through a routing network.

4. The method of claim 3, wherein communicating includes transmitting the assignment information to individually addressed base stations.

5. A first base station (102) in a telecommunication system having a plurality of base stations (102, 104, 106, 108) for communicating with associated subscriber stations (110, 112), comprising:
a memory (503, 505) configured to store identifiers of respective associated subscriber stations (110, 112) and quick paging code words that are respectively assigned to one subscriber station or a group of subscriber stations and to store information identifying all other base stations (102, 104, 106, 108) in a paging area that includes the first base station (102); and
a control unit (502) configured to provide and receive control and other signals and to store and retrieve information from the memory (503, 505);
wherein the code words have been assigned to associated subscriber stations (110, 112) by any base station (102, 104, 106, 108) in a paging area of the first base station (102),
and wherein the control unit (502) is further configured for receiving notifications from all other base stations (102, 104, 106, 108) in the paging area of quick paging code words associated with associated subscriber stations (110, 112) by the other base stations (102, 104, 106, 108), and for transmitting notifications to all other base stations (102, 104, 106, 108) in the paging area of quick paging code words associated with associated subscriber stations (110, 112) by the first base station (102).

6. The base station of claim 5, wherein a notification is individually addressed to either the first base station (102) or another base station (104, 106, 108) in the paging area.

7. A computer-readable medium having stored therein instructions that, when executed, cause the computer to carry out a method of enabling a base station for quick paging a associated subscriber station in a telecommunication system having a plurality of base stations, wherein the method comprises:
assigning by one of the plurality of base stations quick paging code words to the subscriber station, wherein a quick paging code word identifies one subscriber station or a group of subscriber stations;
notifying all other base stations in a paging area of quick paging code words assigned to the associated subscriber station by the base station.

8. The medium of claim 7, further wherein the method further comprises receiving notifications from all other base stations in the paging area of quick paging code words assigned to associated subscriber stations by the other base stations.

9. The medium of claim 7, wherein notifying includes communicating quick paging code word assignment information through a routing network.

10. The medium of claim 9, wherein communicating includes transmitting the assignment information to individually addressed base stations.

## Patentansprüche

1. Verfahren zum Aktivieren einer Basisstation zum Schnellpaging einer Teilnehmerstation in einem Telekommunikationssystem, das mehrere Basisstationen hat, wobei das Verfahren Folgendes umfasst:
Zuweisen (402), durch eine der mehreren Basisstationen, von Schnellpaging-Codewörtern zu der Teilnehmerstation, wobei ein Schnellpaging-Codewort eine Teilnehmerstation oder eine Gruppe von Teilnehmerstationen identifiziert;
Benachrichtigen (404) aller anderen Basisstationen in einem Paging-Bereich über die Schnellpaging-Codewörter, die der zugeordneten Teilnehmerstation durch die Basisstation zugewiesen wurden.

2. Verfahren nach Anspruch 1, das des Weiteren Folgendes umfasst: Empfangen (406) von Benachrichtigungen von allen anderen Basisstationen im Paging-Bereich über Schnellpaging-Codewörter, die anderen zugeordneten Teilnehmerstationen durch die anderen Basisstationen zugewiesen wurden.

3. Verfahren nach Anspruch 1, wobei das Benachrichtigen (404) enthält, Schnellpaging-Codewortzuweisungs-Informationen durch ein Routing-Netzwerk zu übermitteln.

4. Verfahren nach Anspruch 3, wobei das Übermitteln enthält, die Zuweisungsinformationen an einzeln adressierte Basisstationen zu senden.

5. Erste Basisstation (102) in einem Telekommunikationssystem, das mehrere Basisstationen (102, 104, 106, 108) aufweist, zum Kommunizieren mit zugeordneten Teilnehmerstationen (110, 112), die Folgendes umfasst:
einen Speicher (503, 505), der dafür konfiguriert ist, Identifikatoren jeweiliger zugeordneter Teilnehmerstationen (110, 112) und Schnellpaging-Codewörter zu speichern, die jeweils einer Teilnehmerstation oder einer Gruppe von Teilnehmerstationen zugewiesen wurden, und Informationen zu speichern, die alle anderen Basisstationen (102, 104, 106, 108) in einem Paging-Bereich identifizieren, der die erste Basisstation (102) enthält; und
eine Steuereinheit (502), die dafür konfiguriert ist, Steuerungs- und andere Signale bereitzustellen und zu empfangen und Informationen in dem Speicher (503, 505) zu speichern und daraus abzurufen;
wobei die Codewörter zugeordneten Teilnehmerstationen (110, 112) durch jede Basisstation (102, 104, 106, 108) in einem Paging-Bereich der ersten Basisstation (102) zugewiesen wurden, und
wobei die Steuereinheit (502) des Weiteren für Folgendes konfiguriert ist: Empfangen von Benachrichtigungen von allen anderen Basisstationen (102, 104, 106, 108) in dem Paging-Bereich über Schnellpaging-Codewörter, die zugeordneten Teilnehmerstationen (110, 112) durch die anderen Basisstationen (102, 104, 106, 108) zugeordnet wurden, und Senden von Benachrichtigungen an alle anderen Basisstationen (102, 104, 106, 108) in dem Paging-Bereich über Schnellpaging-Codewörter, die zugeordneten Teilnehmerstationen (110, 112) durch die erste Basisstation (102) zugeordnet wurden.

6. Basisstation nach Anspruch 5, wobei eine Benachrichtigung einzeln entweder an die erste Basisstation (102) oder eine andere Basisstation (104, 106, 108) in dem Paging-Bereich adressiert wird.

7. Computerlesbares Medium, auf dem Anweisungen gespeichert sind, die, wenn sie ausgeführt werden, den Computer veranlassen, ein Verfahren zum Aktivieren einer Basisstation zum Schnellpaging einer zugeordneten Teilnehmerstation in einem Telekommunikationssystem, das mehrere Basisstationen hat, auszuführen, wobei das Verfahren Folgendes umfasst:
Zuweisen, durch eine der mehreren Basisstationen, von Schnellpaging-Codewörter zu der Teilnehmerstation, wobei ein Schnellpaging-Codewort eine Teilnehmerstation oder eine Gruppe von Teilnehmerstationen identifiziert;
Benachrichtigen aller anderen Basisstationen in einem Paging-Bereich über Schnellpaging-Codewörter, die der zugeordneten Teilnehmerstation durch die Basisstation zugewiesen wurden.

8. Medium nach Anspruch 7, wobei des Weiteren das Verfahren des Weiteren Folgendes umfasst: Empfangen von Benachrichtigungen von allen anderen Basisstationen in dem Paging-Bereich über Schnellpaging-Codewörter, die zugeordneten Teilnehmerstationen durch die anderen Basisstationen zugewiesen wurden.

9. Medium nach Anspruch 7, wobei das Benachrichtigen enthält, Schnellpaging-Codewortzuweisungs-Informationen durch ein Routing-Netzwerk zu übermitteln.

10. Medium nach Anspruch 9, wobei das Übermitteln das Senden der Zuweisungsinformationen zu einzeln adressierten Basisstationen enthält.

## Revendications

1. Procédé visant à permettre à une station de base de téléavertir rapidement une station d'abonné dans un système de télécommunication ayant une pluralité de stations de base, comprenant :
l'affectation (402), par une de la pluralité de stations de base, de mots de code de téléavertissement rapide à la station d'abonné, un mot de code de téléavertissement rapide identifiant une station d'abonné ou un groupe de stations d'abonnés ;
la notification (404) à toutes les autres stations de base dans une zone de téléavertissement des mots de code de téléavertissement rapide affectés à la station d'abonné associée par la station de base.

2. Procédé selon la revendication 1, comprenant en outre la réception (406) de notifications en provenance de toutes les autres stations de base dans la zone de téléavertissement de mots de code de téléavertissement rapide affectés à d'autres stations d'abonnés associées par les autres stations de base.

3. Procédé selon la revendication 1, dans lequel la notification (404) comprend la communication d'informations d'affectation de mot de code de téléavertissement rapide par l'intermédiaire d'un réseau de routage.

4. Procédé selon la revendication 3, dans lequel la communication comprend la transmission des informations d'affectation à des stations de base adressées individuellement.

5. Première station de base (102) dans un système de télécommunication ayant une pluralité de stations de base (102, 104, 106, 108) pour communiquer avec des stations d'abonnés associées (110, 112), comprenant :
une mémoire (503, 505) configurée pour stocker des identificateurs de stations d'abonnés associées (110, 112) respectives et des mots de code de téléavertissement rapide qui sont affectés respectivement à une station d'abonné ou à un groupe de stations d'abonnés et pour stocker des informations identifiant toutes les autres stations de base (102, 104, 106, 108) dans une zone de téléavertissement qui comprend la première station de base (102) ; et
une unité de commande (502) configurée pour fournir et recevoir des signaux de commande et d'autres signaux et pour stocker et récupérer des informations de la mémoire (503, 505) ;
les mots de code ayant été affectés à des stations d'abonnés associées (110, 112) par une quelconque station de base (102, 104, 106, 108) dans une zone de téléavertissement de la première station de base (102),
et l'unité de commande (502) étant en outre configurée pour recevoir des notifications en provenance de toutes les autres stations de base (102, 104, 106, 108) dans la zone de téléavertissement de mots de code de téléavertissement rapide associés à des stations d'abonnés associées (110, 112) par les autres stations de base (102, 104, 106, 108), et pour transmettre des notifications à toutes les autres stations de base (102, 104, 106, 108) dans la zone de téléavertissement de mots de code de téléavertissement rapide associés à des stations d'abonnés associées (110, 112) par la première station de base (102).

6. Station de base selon la revendication 5, dans laquelle une notification est adressée individuellement soit à la première station de base (102) soit à une autre station de base (104, 106, 108) dans la zone de téléavertissement.

7. Support lisible par ordinateur dans lequel sont stockées des instructions qui, lorsqu'elles sont exécutées, amènent l'ordinateur à effectuer un procédé visant à permettre à une station de base de téléavertir rapidement une station d'abonné associée dans un système de télécommunication ayant une pluralité de stations de base, le procédé comprenant :
l'affectation, par une de la une pluralité de stations de base, de mots de code de téléavertissement rapide à la station d'abonné, un mot de code de téléavertissement rapide identifiant une station d'abonné ou un groupe de stations d'abonnés ;
la notification à toutes les autres stations de base dans une zone de téléavertissement de mots de code de téléavertissement rapide affectés à la station d'abonné associée par la station de base.

8. Support selon la revendication 7, en outre dans lequel le procédé comprend en outre la réception de notifications en provenance de tous les autres stations de base dans la zone de téléavertissement de mots de code de téléavertissement rapide affectés à des stations d'abonnés associées par les autres stations de base.

9. Support selon la revendication 7, dans lequel la notification comprend la communication d'informations d'affectation de mot de code de téléavertissement rapide par l'intermédiaire d'un réseau de routage.

10. Support selon la revendication 9, dans lequel la communication comprend la transmission des informations d'affectation à des stations de base adressées individuellement.
